# EUROPÄISCHE PATENTSCHRIFT

(11) **EP 0 917 818 B1**
(45) Veröffentlichungstag und Bekanntmachung des Hinweises auf die Patenterteilung: **02.05.2003**
(21) Anmeldenummer: 98120722.8
(22) Anmeldetag: 31.10.1998
(51) Int. Cl.: A01D 43/06

(54) **Fördereinrichtung für Rasenmäher oder Kehrmaschinen**
Conveying device for lawnmower or road sweeper
Dispositif convoyeur pour tondeuse à gazon ou balayeuse mécanique

(30) Priorität: 03.11.1997 DE 19749960
(43) Veröffentlichungstag der Anmeldung: 26.05.1999
(73) Patentinhaber: Horst Staiger & Söhne GmbH, 78126 Königsfeld-Erdmannsweiler (DE)
(72) Erfinder: Staiger, Jürgen, 78126 Königsfeld-Erdmannsweiler (DE)
(74) Vertreter: Patentanwälte Westphal, Mussgnug & Partner

(56) Entgegenhaltungen:
- EP-A- 0 122 903
- DE-C- 202 143
- DE-U- 9 005 367
- FR-A- 2 512 632
- FR-A- 2 751 167
- GB-A- 478 505
- GB-A- 2 019 706
- US-A- 1 387 680
- US-A- 2 338 932

## Beschreibung

Die Erfindung betrifft eine Fördereinrichtung nach dem Oberbegriff des Anspruchs 1.

Bei bekannten Rasenmähern wird das vom Mähwerk geschnittene Mähgut meist mittels einer Art von Turbinengebläse oder dergl. durch einen Förderkanal in einen Auffangbehälter, Grasfangkorb oder dergl. ausgeblasen. Diese Fördereinrichtungen haben eine starke Geräuschentwicklung, die als sehr störend empfunden wird. Außerdem ist die Förderleistung nicht besonders groß und es können Verstopfungen des Förderkanals durch das Mähgut auftreten. Für Kehrmaschinen sind derartige Fördereinrichtungen nicht bekannt.

Aus GB-A-478 505 ist eine Fördereinrichtung der eingangs genannten Art für das Mähgut eines Rasenmähers bekannt, bei der die beiden gegenläufig umlaufenden Förderbänder möglichst fest gegeneinandergepresst werden, um im Mähgut enthaltenes Wasser auszupressen. Damit ist grundsätzlich keine große Durchsatzleistung für das Fördergut zu erreichen und Verstopfungen der Fördereinrichtung durch das Fördergut sind unvermeidlich. Zwar können die am Austragende der Fördereinrichtung angeordneten Umlenkrollen für die Förderbänder auf elastischen Armen gelagert werden, um eine unregelmäßige seitliche Verschiebung der Förderbänder zu korrigieren. Dadurch kann jedoch die Förderleistung im übrigen Teil der Fördereinrichtung praktisch nicht gesteigert werden.

Durch die Erfindung soll eine Fördereinrichtung der eingangs genannten Art so verbessert werden, daß sie bei Betrieb kaum Geräusche erzeugt, eine große Durchsatzleistung für Fördergut erbringt und Verstopfungen der Fördereinrichtung durch das Fördergut praktisch nicht auftreten.

Diese Aufgabe wird bei einer Fördereinrichtung der eingangs genannten Art erfindungsgemäß durch die Merkmale des Anspruchs 1 gelöst.

Die erfindungsgemäße Fördereinrichtung läuft äußerst geräuscharm, insbesondere da sie nur mit geringer Geschwindigkeit betrieben werden muß, um das anfallende Fördergut in den Auffangbehälter zu fördern. Durch den relativ langsamen Lauf des Bandförderers entsteht auch nur eine sehr geringe Unfalloder Verletzungsgefahr bei Benutzung desselben. Im Bereich der eigentlichen Förderabschnitte der beiden Förderbänder werden dieselben unter Vorspannung gegeneinandergedrückt, so daß sie im Leerbetrieb ohne Förderung von Mähgut aneinander anliegen. Sobald Fördergut am Eintrittsende der Förderabschnitte ankommt, werden die Förderabschnitte vom eintretenden Fördergut auseiandergedrückt und fördern das Fördergut zwischen sich bis zum Austrittsende der Förderabschnitte, von wo es in den Auffangbehälter gelangt. Falls sperrige Gegenstände, Steine oder dergl., im Fördergut enthalten sind, ist ein Ausweichen der Förderbänder ohne Blockieren des Bandförderers jederzeit möglich. Ein weiterer Vorteil des erfindungsgemäß auf einen Rasenmäher angewendeten Bandförderers ist darin zu sehen, daß während des Durchlaufens des Mähguts durch die Förderabschnitte eine federnde Pressung auf das Mähgut ausgeübt wird, wodurch eventuell im Mähgut enthaltendes Wasser ausgedrückt wird und nach unten abläuft. Dadurch kommt das Mähgut vergleichsweise trocken und vorkompaktiert in den Auffangbehälter, der infolgedessen mehr Mähgut aufnimmt.

Der erfindungsgemäße Bandförderer läßt sich nicht nur bei Rasenmähern, sondern auch zum Fördern und Kompaktieren von anderem losen Gut, beispielsweise von durch eine Kehrmaschine aufgenommenen Kehricht, zweckmäßig anwenden.

Die Unteransprüche sind auf vorteilhafte Ausgestaltungen der Erfindung gerichtet.

Anspruch 5 ist auf eine zweckmäßige gegenseitige Anordnung von Bandförderer und Auffangbehälter gerichtet, die den Vorteil hat, daß sich ein zusätzlicher Preßvorgang für das im Auffangbehälter abgelegte Mähgut ergibt, da der Auffangbehälter in diesem Falle in Schichten von unten nach oben gefüllt wird, wobei die oberen Schichten jeweils auf die unteren Schichten drücken.

Zusätzliche Vorteile ergeben sich auch aus der Umkehrbarkeit der Antriebsrichtung des Bandförderers gemäß Anspruch 6, beispielsweise bei einer trotz der federnden Lagerung des einen Förderbands auftretenden Blockierung oder zum gleichzeitigen Mulchen während des Mähvorgangs, wobei das Mähgut entweder aus der offenen Unterseite des Mähergehäuses oder aus dem Abluftkanal desselben austreten kann.

Anhand der Figuren wird ein bevorzugtes Ausführungsbeispiel der Erfindung näher erläutert. Es zeigt:
- Figur 1: eine schematische Seitenansicht von Mähwerk und Bandförderer eines in Betrieb befindlichen Rasenmähers, wobei die Seitenwand des Bandförderers geöffnet und der Auffangbehälter sowie entsprechende, diese Teile umschließende Gehäuseteile weggelassen sind, und
- Figur 2: eine der Fig.1 entsprechende Teilansicht bei Leerlauf des Rasenmähers in bezüglich Fig.1 etwas vergrößertem Maßstab.

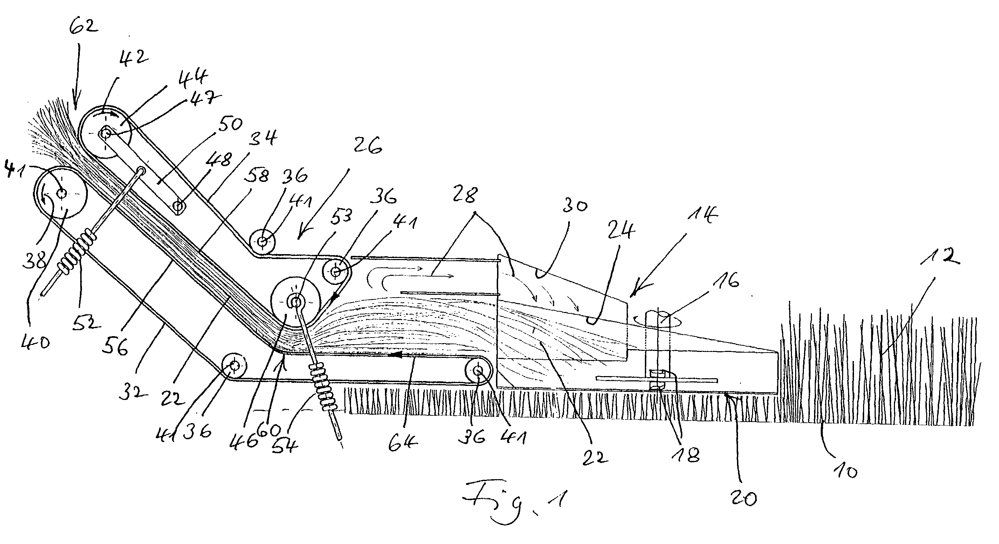

In Fig.1 ist der Rasenmäher während des Mähvorgangs eines vom Erdboden 10 nach oben stehenden Rasenbestandes 12 dargestellt. Das allgemein mit 14 bezeichnete Mähwerk wird von nicht dargestellten Rädern des Rasenmähers etwa in der in Fig.1 dargestellten Höhe über dem Erdboden 10 gehalten, so daß die über eine Antriebswelle 16 angetriebenen Schneidmesser 18 den Grasbestand 12 etwa in einer Schnitthöhe 20 abschneiden. Das Mähgut 22 wird durch einen nach hinten weiter werdenden Förderkanal 24 zu dem allgemein mit 26 bezeichneten Bandförderer gefördert. Die mit dem Mähgut 22 zum Bandförderer 26 geförderte Luft wird gemäß den Pfeilen 28 durch einen Abluftkanal 30 des Gehäuses wieder nach vorne abgeführt.

Der Bandförderer 26 besteht aus zwei umlaufenden endlosen Förderbändern, und zwar einem unteren Förderband 32 und einem oberen Förderband 34. Beide Förderbänder laufen über feste Umlenkrollen 36. Das untere Förderband 32 läuft zusätzlich um eine feste, mit dem Förderband 32 reibungsschlüssig verbundene, in nicht näher dargestellter Weise im Sinn des Pfeils 38 in Drehung versetzte Antriebsrolle 40, während das obere Förderband 34 über eine beweglich gelagerte und im Sinn des Pfeils 42 angetriebene Antriebsrolle 44 und eine beweglich gelagerte Umlenkrolle 46 umläuft. Die festen Umlenkrollen 36 und die feste Antriebsrolle 41 sind jeweils auf festen horizontalen Achsen 41 drehbar gelagert. Die Achse 47 der Antriebsrolle 44 ist über einen am entgegengesetzten Ende 48 gehäusefest gelagerten Schwinghebel 50 beweglich gelagert, der über eine Zugfeder 52 in nicht näher dargestellter Weise mit einem gehäusefesten Punkt verbunden ist. Die Achse 47 und somit die bewegliche Antriebsrolle 44 wird dadurch gegen die feste untere Antriebsrolle 40 gezogen. In ähnlicher Weise ist die Achse 53 der beweglichen Umlenkrolle 46 des oberen Förderbandes 34 über eine Zugfeder 54 in nicht näher gezeigter Weise mit einem gehäusefesten Punkt verbunden. Dadurch wird sie gegen das untere Förderband 32 gezogen.

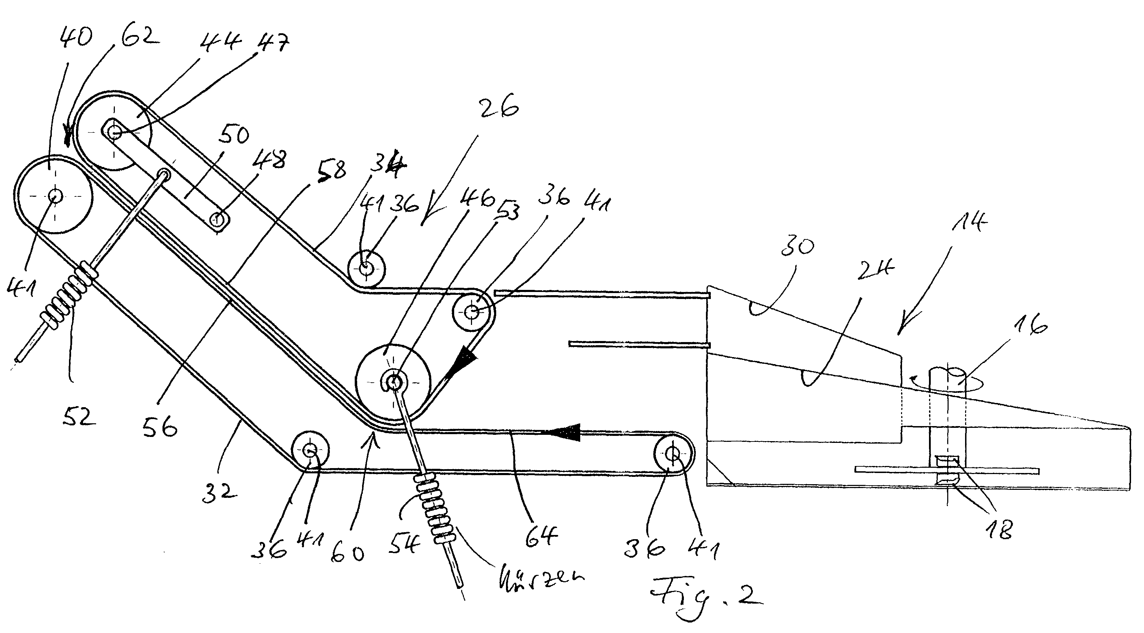

Die durch die beiden Zugfedern 52 und 54 erzeugte Vorspannung des oberen Förderbandes 34 ergibt bei Leerlauf, d.h. ohne Anfall von Mähgut, eine gegenseitige Anlage der beiden Förderbänder 32 und 34 jeweils in den zwischen der beweglichen Umlenkrolle 46 und den beiden Antriebsrollen 40 und 44 verlaufenden Förderabschnitten 56 und 58. Sobald Mähgut 22 am Eintrittsende 60 der Förderabschnitte 56 und 58 ankommt, wird die bewegliche Umlenkrolle 46 gegen die Kraft der Zugfeder 54 durch das zwischen die beiden Förderabschnitte 56 und 58 eintretende und zusammengepreßte Mähgut 22 nach oben gedrückt. Das Mähgut 22 wird zwischen den Förderabschnitten 56 und 58 der beiden Förderbänder 32 und 34 bis zu dem durch die Antriebsrollen 40 und 44 gebildeten Austrittsende 62 der Förderabschnitte 56 und 58 gefördert und tritt dort in einen nicht dargestellten Auffangbehälter aus, dessen Boden möglichst weit unterhalb des Austrittsendes 62 der Förderabschnitte 56,58 angeordnet ist. In gleicher Weise wie die bewegliche Umlenkrolle 46 wird auch die bewegliche Antriebsrolle 44 aus der Stellung der Fig.2 in die Stellung der Fig.1 gegen die Kraft der Zugfeder 52 nach oben gedrückt, so daß das Mähgut unter geeigneter federnder Pressung vom Eintrittsende 60 zum Austrittsende 62 der Förderabschnitte 56 und 58 gefördert wird.

Das untere Förderband 32 weist unmittelbar anschließend an das Mähwerk 14 einen horizontalen Zuführabschnitt 64 auf, durch den das aus dem Mähwerk 14 austretende Mähgut 22 lose zum Eintrittsende 60 der Förderabschnitte 56 und 58 gefördert wird.

### Bezugszeichenliste

- 10: Erdboden
- 12: Rasenbestand
- 14: Mähwerk
- 16: Antriebswelle
- 18: Schneidmesser
- 20: Schnitthöhe
- 22: Mähgut
- 24: Förderkanal
- 26: Bandförderer
- 30: Abluftkanal
- 32: unteres Förderband
- 34: oberes Förderband
- 36: feste Umlenkrolle
- 40: feste Antriebsrolle
- 41: Achse
- 44: bewegliche Antriebsrolle
- 46: bewegliche Umlenkrolle
- 47: Achse
- 48: entgegengesetztes Ende
- 50: Schwinghebel
- 52: Zugfeder
- 53: Achse
- 54: Zugfeder
- 56, 58: Förderabschnitte
- 60: Eintrittsende
- 62: Austrittsende

## Patentansprüche

1. Fördereinrichtung für Fördergut in Form von Mähgut, Kehricht oder dergl., wobei die Fördereinrichtung aus einem Bandförderer (26) besteht, der zwei gleich schnell gegensinnig angetriebene endlose Förderbänder (32,34) aufweist, die um Antriebs- (40,44) und Umlenkrollen (36,46) umlaufen, welche auf horizontalen Achsen (41, 47,53) gelagert sind, wobei die Förderbänder (32,34) zwei einander gegenüberliegende parallele Förderabschnitte (56,58) aufweisen, die ohne zu förderndes Fördergut (22) aneinander anliegen, ankommendes Fördergut (22) zwischen sich aufnehmen können und deren gegenseitiger Abstand durch den vom Fördergut (22) auf sie ausgeübten Spreizdruck gegen Federkraft (54) vergrößerbar ist, **dadurch gekennzeichnet, daß** je eine am Eintrittsende (60) und je eine am Austrittsende (62) der Förderabschnitte (56,58) angeordnete Umlenkrolle (46) bzw. Antriebsrolle (44) eines der beiden Förderbänder (32,34) auf je einer Achse (47,53) gelagert ist, die federnd (54) mit je einem bezüglich des Gehäuses der Fördereinrichtung festen Punkt verbunden ist und daß die Achsen (53,47) einer am Eintrittsende (60) angeordneten Umlenkrolle (46) des oberen Förderbandes (34) und einer am Austrittsende (62) gegenüber einer festen Antriebsrolle (40) des unteren Förderbandes (32) angeordneten Antriebsrolle (44) des oberen Förderbandes (34) durch an tieferen, fest mit dem Gehäuse der Fördereinrichtung verbundenen Punkten befestigte Zugfedern (54) gegen das untere Förderband (32) gezogen werden.

2. Fördereinrichtung nach Anspruch 1, **dadurch gekennzeichnet, daß** die Förderbänder (32, 34) aus Gummi oder gummiartigem Kunststoff bestehen und durch Reibung von den Antriebsrollen (40,44) angetrieben werden.

3. Fördereinrichtung nach einem der Ansprüche 1 oder 2, **dadurch gekennzeichnet, daß** die Antriebsrollen (40,44) Kettenräder tragen, die mit einem Kettenantrieb verbunden sind.

4. Fördereinrichtung nach Anspruch 3, **dadurch gekennzeichnet, daß** die Förderbänder (32,34) aus Gummi oder gummiartigem Kunststoff bestehen.

5. Fördereinrichtung nach einem der vorangehenden Ansprüche, **dadurch gekennzeichnet, daß** das Austrittsende (62) des Bandförderers (26) oberhalb des Bodens des Auffangbehälters für das Mähgut (22) angeordnet ist.

6. Fördereinrichtung nach einem der vorangehenden Ansprüche, **dadurch gekennzeichnet, dass** die Antriebsrichtung der beiden Förderbänder (32,34) umkehrbar ist.

7. Anwendung der Fördereinrichtung nach einem der vorangehenden Ansprüche auf einen Rasenmäher zwischen dessen Mähwerk und dessen Auffangbehälter.

8. Anwendung der Fördereinrichtung nach einem der Ansprüche 1 - 6 auf eine Kehrmaschine zwischen deren Kerichtaufnahmeteil und deren Auffangbehälter.

## Claims

1. Conveying device for material to be conveyed in the form of mown material, refuse or similar, wherein the conveying device consists of a belt conveyor (26) which comprises two continuous conveyor belts (32, 34) which are driven at the same speed in opposite directions and run around drive pulleys (40, 44) and deflection pulleys (36, 46) which are mounted on horizontal shafts (41, 47, 53), wherein the conveyor belts (32, 34) comprise two parallel conveyor lengths (56, 58) which are disposed opposite one another, lie against one another in the absence of material (22) to be conveyed, can accommodate incoming material (22) to be conveyed between them and the mutual spacing of which can be increased against spring force (54) by the spreading pressure exerted on them by the material (22) to be conveyed, **characterised in that** a deflection pulley (46) and drive pulley (44), respectively, disposed at the entry end (60) and at the exit end (62) of the conveyor lengths (56, 58), of one of the two conveyor belts (32, 34) is mounted on a respective shaft (47, 53) which is resiliently connected to a point which is fixed in relation to the housing of the conveying device, and that the shafts (53, 47) of a deflection pulley, disposed at the entry end (60), of the top conveyor belt (34) and a drive pulley (44), disposed at the exit end (62) opposite a fixed drive pulley (40) of the bottom conveyor belt (32), of the top conveyor belt (34) are pulled towards the bottom conveyor belt (32) by tension springs (54) which are fastened to the lower points which are firmly connected to the housing of the conveying device.

2. Conveying device according to Claim 1, **characterised in that** the conveyor belts (32, 34) consist of rubber or a rubber-like plastics material and are driven by means of friction by the drive pulleys (40, 44).

3. Conveying device according to either of Claims 1 and 2, **characterised in that** the drive pulleys (40, 44) bear chain wheels which are connected to a chain drive.

4. Conveying device according to Claim 3, **characterised in that** the conveyor belts (32, 34) consist of rubber or a rubber-like plastics material.

5. Conveying device according to any one of the preceding Claims, **characterised in that** the exit end (62) of the belt conveyor (26) is disposed above the bottom of the collecting container for the mown material (24).

6. Conveying device according to any one of the preceding Claims, **characterised in that** the driving direction of the two conveyor belts (32, 34) is reversible.

7. Application of the conveying device according to any one of the preceding Claims to a lawn mower between the cutter bar and the collecting container thereof.

8. Application of the conveying device according to any one of Claims 1 - 6 to a road sweeper between the refuse take-up part and the collecting container thereof.

## Revendications

1. Dispositif convoyeur pour des produits de fauche, de balayage ou autres, comprenant un convoyeur à bandes (26) qui comporte deux bandes transporteuses (32, 34) sans fin, entraînées à vitesse rapide en sens opposé, et tournant autour de rouleaux d'entraînement (40, 44) et de renvoi (36, 46) montés sur des axes horizontaux (41, 47, 53),
les bandes transporteuses (32, 34) ayant deux segments (56, 58) opposes, parallèles, qui, en l'absence de produits à transporter (22), sont appliqués l'un contre l'autre, pour recevoir le produit (22) à transporter entre elles et dont l'intervalle peut être augmenté par la force d'écartement exercée sur eux par le produit transporté (22) contre une force de ressort (54),
**caractérisé en ce que**
chaque fois un rouleau de renvoi (46) ou d'entraînement (44) prévu à une extrémité d'entrée (60) ou à une extrémité de sortie (62) des segments de bandes transporteuses (56, 58) de l'une des bandes transporteuses (32, 34) est porté par un axe (47, 53) respectif, relié de manière élastique (54) à un point fixe du boîtier du dispositif convoyeur, et
les axes (53, 47) d'un galet de renvoi (46) prévus à l'extrémité d'entrée (60) de la bande transporteuse supérieure (34) et d'un rouleau d'entrainement (44) de la bande transporteuse supérieure (34) à l'extrémité de sortie (62), en regard d'un rouleau d'entraînement fixe (40) de la bande transporteuse inférieure (32), sont tirés contre la bande transporteuse inférieure (32) par des ressorts de traction (52, 54) fixés à des points plus bas, solidaires du boîtier du dispositif convoyeur.

2. Dispositif convoyeur selon la revendication 1,
**caractérisé en ce que**
les bandes transporteuses (32, 34) sont en caoutchouc ou en une matière plastique assimilable à du caoutchouc et elles sont entraînées par les rouleaux d'entraînement (40, 44) par friction.

3. Dispositif convoyeur selon l'une des revendications 1 ou 2,
**caractérisé en ce que**
les rouleaux d'entraînement (40, 44) portent des roues à chaîne reliées à un entraînement à chaine.

4. Dispositif convoyeur selon la revendication 3,
**caractérisé en ce que**
les bandes transporteuses (32, 34) sont en caoutchouc ou en une matière plastique analogue à du caoutchouc.

5. Dispositif convoyeur selon l'une quelconque des revendications précédentes,
**caractérisé en ce que**
l'extrémité de sortie (62) du convoyeur à bandes (26) se trouve au-dessus du fond du réceptacle pour les produits coupés (22).

6. Dispositif convoyeur selon l'une quelconque des revendications précédentes,
**caractérisé en ce que**
l'installation d'entraînement des deux bandes transporteuses (32, 34) est réversible.

7. Application du dispositif convoyeur selon l'une des revendications précédentes à une tondeuse à gazon, installé entre le mécanisme de coupe et le réceptacle.

8. Application du dispositif convoyeur selon l'une des revendications 1 à 6 à une balayeuse entre les organes de balayage et le réceptacle.
